# EUROPEAN PATENT APPLICATION

(11) **EP 3 178 675 A1**
(43) Date of publication of application: **14.06.2017**
(21) Application number: 16795216.7
(22) Date of filing: 18.01.2016
(51) Int. Cl.: B60C 23/04, B60C 23/02, G01M 17/02, G01L 17/00

(54) **TYRE PRESSURE GAUGE**

(30) Priority: 12.10.2015 CN 201510658611
(71) Applicant: Steelmate Co., Ltd., Zhongshan, Guangdong 528425 (CN)
(72) Inventor: LI, Anpei, Zhongshan Guangdong 528425 (CN); SU, Zhiqiang, Zhongshan Guangdong 528425 (CN)
(74) Representative: Gulde & Partner
(86) International application number: PCT/CN2016/071195
(87) International publication number: WO 2017/063316

(57) **Abstract**

A tire pressure gauge includes a body and a gas nozzle assembly pivotally connected with the body. The body includes an enclosure, a PCB assembly disposed in the enclosure, a battery, and a metal connection member; the enclosure includes a front panel, a first axle hole is defined in the first axle bed; the metal connection member includes a second axle bed corresponding to the first axle bed, another first axle hole is defined in the second axle bed, a first threaded embossment is formed on the second axle bed, a swing gap is defined between the first and second axle beds; and the gas nozzle assembly includes a swing head, and a screw passes through the first axle hole, second axle hole, and another first axle hole, and then connects with the first threaded embossment.

## Description

### FIELD OF THE INVENTION

The present invention involves field of tire pressure monitoring and more particularly, involves a tire pressure gauge.

### BACKGROUD OF THE INVENTION

To ensure safe driving of vehicle, a popular practice is to mount a tire pressure monitoring system (TPMS) in a car for real time monitoring gas pressure and temperature of the tires. In operation of the TPMS, a tire pressure sensor is installed on a gas nozzle of a hub of each tire. The system also includes a sensor enclosure, a stem, kinds of sealing members and fasteners. Components for example a tire pressure-sensing element and battery are contained in the sensor enclosure. No matter whether the car is moving, the tire pressure sensors real time automatically monitor pressure and temperature of the tires, and provide alarm when the tire pressure and temperature is abnormal, thus avoiding traffic accidents due to malfunction of the tires and keeping safe operation of the car.

However, a prior art tire pressure sensor fails to adjust the angle between itself and stem. This limits application range of the sensor, and the sensor is restricted to be mounted in a specific wheel hub. In design of a car wheel hub, it is desired to have a varied angle range between the gas nozzle stem and sensor enclosure (for example ranging between 15°-25°). In addition, there are kinds of different types of hubs, and accordingly, for a tire pressure sensor where the angle between the stem and sensor enclosure is unchanged, following limitations exist: in some situations, the bottom of the sensor enclosure may interfere and rub with the bottom of hub, thus the enclosure being subject to huge external force and even causing installation failure of the enclosure; and in other situations, a large gap may exist between the sensor enclosure and bottom of the wheel hub, thus making it hard for the hub to effectively support the enclosure and causing the enclosure to occupy large space and accordingly, the enclosure possibly withstands excessive load which results in crack or loosening of the enclosure from the stem.

Therefore, there is need in the art to adjust the angle of the stem with respect to the sensor enclosure, thereby when mounting the tire pressure sensor and for different wheel hub designs, the sensor enclosure can snugly contact the wheel hub bottom such that the enclosure is effectively supported by the hub and interference between the enclosure and hub is as small as possible.

### SUMMARY OF THE INVENTION

The objection of the current invention is to provide a tire pressure gauge capable of adjusting angle between the enclosure and gas nozzle stem, thus overcoming shortcoming of prior art.

To realize the above object, the following solution is proposed.

A tire pressure gauge includes a body and a gas nozzle assembly pivotally connected with the body. The body includes an enclosure in which an intake hole is defined, a PCB assembly disposed in the enclosure for detecting gas gone into the enclosure via the intake hole and transmitting pressure signals as electrical signals out of a tire, a battery for supplying power to the body, and a metal connection member partially extended out of the enclosure; the enclosure includes a front panel on which a first axle bed is formed, a first axle hole is defined in the first axle bed; the metal connection member includes a second axle bed corresponding to the first axle bed, another first axle hole is defined in the second axle bed, a first threaded embossment is formed on the second axle bed and surrounds the first axle hole of the second axle, a swing gap is defined between the first and second axle beds; and the gas nozzle assembly includes a swing head disposed in the swing gap, provided with a second axle hole, and capable of rotation with respect to the swing gap, and a screw passes through the first axle hole of the first axle bed, second axle hole of the swing head, and another first axle hole of the second axle bed, and then connects with the first threaded embossment.

Compared with prior art, the present invention brings the following good effects:
Pivotal connection between the tire pressure gauge body and gas nozzle assembly is realized, thus realizing adjustment of the angle between the stem and body to adapt tires with different hub mounting surfaces and leading to high universality of the product. Moreover, as the second axle bed and first threaded embossment are made of metal, the connection between the enclosure and gas nozzle is reliable and better wear-ability is obtained.

Preferably, the PCB assembly includes a circuit board with a top surface and bottom surface, a pressure sensor, an antenna and a control circuit; the pressure sensor is configured to detect pressure of gas entered into the enclosure from the interior of the tire via the intake hole, and outputs pressure signals representing tire pressure to the antenna which then transmits the same signals; the battery is disposed on the top surface of the circuit board; and the pressure sensor, an antenna and a control circuit of the PCB assembly are all disposed on the bottom surface of the circuit board.

Preferably, the enclosure further includes a bottom plate connected with the front panel, a pair of side plates disposed on the bottom plate and all connected with the front panel, a rear plate, and a cover; a raised portion is formed on the bottom plate at a location close to the rear panel; and an inner sidewall of the raised portion defines together with the front panel a clamping opening for clamping the circuit board therein.

Preferably, each of two corners of the circuit board adjacent to the front panel is provided with a fastening hole; the bottom plate is provided with two second threaded embossments at locations corresponding to these fastening holes; and the circuit board is mounted to the bottom plate by two screws which pass through respective fastening holes and engage respective second threaded embossments.

Preferably, one end of the second axle bed is bent to form a bending arm; a metal pad is laterally extended from the other end of the bending arm in a direction away from the second axle bed; a through hole is defined in the metal pad at a location corresponding to a second threaded embossment; the screw passes through the corresponding fastening hole of the circuit board, through hole of the metal pad and then is connected with the second threaded embossment; and one end of the antenna is close to the fastening hole and electrically contacts the metal pad.

Preferably, the battery is connected with the PCB assembly through a pair of battery tabs; each of the free ends of the battery tabs is provided with a through hole; the through holes of the battery tabs extend such that the through holes overlap the fastening holes respectively.

Preferably, the intake hole is defined in the bottom plate; the pressure sensor is disposed on the circuit board at a location corresponding to the intake hole; a sealing gasket is located between the intake hole and pressure sensor; and the sealing gasket has a gas incoming path which interconnects the intake hole and a sensitive element of the pressure sensor.

Preferably, one end of the second axle bed is bent to form a bending arm; a supporting tab is laterally extended from one end of the bending arm close to the second axle bed in a direction away from the second axle bed; a vent hole is defined in the supporting tab and communicates with both of the intake hole and gas incoming path; a receiving slot is defined in the supporting tab and surrounds the vent hole; and the sealing gasket is disposed inside the receiving slot.

Preferably, one of the side plates is provided with a plastic injection hole; a gap is defined between the plastic injection hole and top surface of the circuit board; and another gap is defined between the plastic injection hole and bottom surface of the circuit board.

Preferably, the plastic injection hole is defined in the side plate away from the first threaded embossment.

### BRIEF DESCRIPTION OF THE DRAWINGS

Figure 1 illustrates a perspective view of a tire pressure gauge according to one embodiment of the invention;
Figure 2 illustrates another perspective view of the tire pressure gauge of figure 1;
Figure 3 denotes an exploded view of the tire pressure gauge of figure 1;
Figure 4 shows a cross-sectional view of figure 2 along line B-B;
Figure 5 shows an enlarged view of portion A of figure 4;
Figure 6 shows a perspective view of a metal connection member of the invention; and
Figure 7 illustrates a structural view of assembled enclosure and metal connection member of the tire pressure gauge of the invention, here a cover and a bending arm of the metal connection member being omitted.

### DETAILED DESCRIPTION OF THE INVENTION

Various embodiments of the invention are described below in greater details with reference to the drawings.

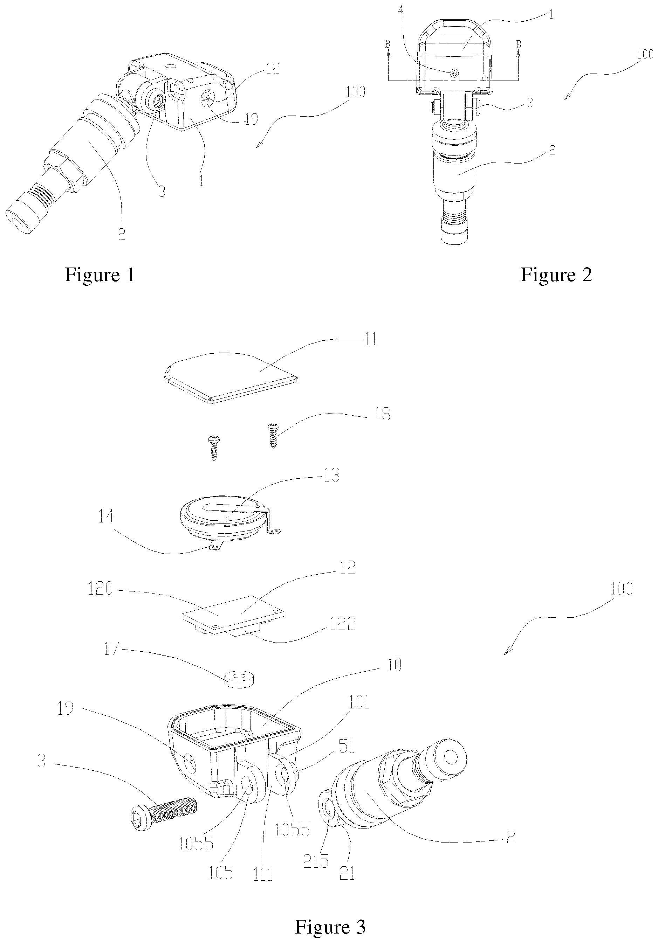

Figures 1-7 collectively show a tire pressure gauge 100 of the invention for being mounted on a wheel hub of a car so as to detect gas pressure inside the tire and transmitting signals representing the pressure to outside, said signals being received and displayed by a tire pressure displaying device.

Please refer to figure 3. The tire pressure gauge 100 includes a body 1 and a gas nozzle assembly 2 pivotally connected with the body 1.

The body 1 includes an enclosure 10, a PCB assembly 12 disposed in the enclosure 10, a battery 13 also disposed in the enclosure 10, and a metal connection member 5 partially extended out of the enclosure 10. The battery 13 supplies power to the PCB assembly 12 (that is, the battery 13 supplies power to the body 1).

The enclosure 10 includes a bottom plate 104, a front panel 101, a rear panel 102, a pair of side plates 103 which interconnects the front and rear panels 101 and 102, and a cover 11 for sealing the enclosure 10. The bottom plate 104, front panel 101, rear panel 102 and the pair of side plates 103 jointly define a receiving space for receiving the PCB assembly 12 and battery 13 therein. In addition, an outer surface of the front panel 101 extends to form a first axle bed 105.

Moreover, an intake hole 4 may be defined in the enclosure 10 at suitable location such as the bottom plate 104.

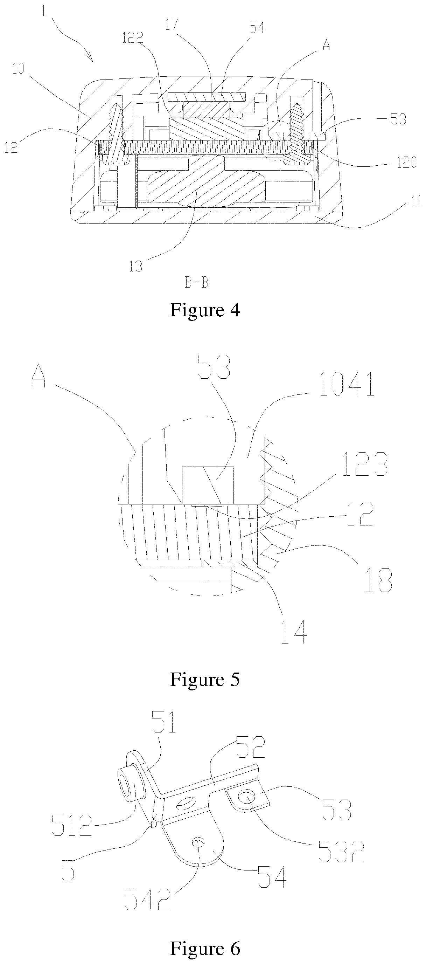

Reference is made to figure 6. The metal connection member 5 includes a second axle bed 51 mounted on the front panel 101 and corresponding to the first axle bed 105, a bending arm 52 formed by bending one end of the second axle bed 51, a supporting tab 54 laterally extended from one end of the bending arm 52 close to the second axle bed 51 in a direction away from the second axle bed 51, and a metal pad 53 laterally extended from the other end of the bending arm 52 in a direction away from the second axle bed 51.

Each of the above two axle beds is provided with a first axle hole 1055, and a swing gap 111 is defined between the two axle beds.

The gas nozzle assembly 2 has a swing head 21, which has a second axle hole 215 defined therein, which is disposed inside the swing gap 111, and which rotates relative to the swing gap 111. A screw3 passes through in turn a first axle hole 1055, second axle hole 215, another first axle hole 1055, and then screwed with a nut (not shown), hence achieving pivotal connection between the tire pressure gauge body 1 and gas nozzle assembly 2, rotation of the stem with respect to the screw 3, and thus further realizing adjustment of the angle between the stem and body 1 to adapt tires with different hub mounting surfaces and leading to high universality of the product.

Furthermore, a first threaded embossment 512 is formed on the second axle bed 51 at a location surrounding the first axle hole 1055. The screw 3 passes through in turn the first axle hole 1055 of the first axle bed 105, second axle hole 215, first axle hole 1055 of the second axle bed 105, and then is connected with the first threaded embossment 512. As the first threaded embossment 512 is of metal, connection between the body 1 and gas nozzle assembly 2 is stable and good wear-ability is maintained.

Please also refer to figures 3-6. Preferably, the PCB assembly 12 includes a circuit board 120, a pressure sensor 122, an antenna 123 and a control circuit (not labeled). The pressure sensor 122 functions to detect pressure of gas entered into the enclosure 10 from the interior of the tire via the intake hole 4, and outputs pressure signals representing tire pressure to the control circuit, said pressure signals being transmitted by the antenna and received and displayed by the tire pressure displaying device.

Preferably, the pressure sensor 122, an antenna 123 and a control circuit of the PCB assembly 12 are all disposed on a bottom surface of the circuit board 120, while the battery 13 is disposed on a top surface of the circuit board 120. Moreover, the battery 13 is electrically connected with the circuit or element on the circuit board 120 through a pair of battery tabs 14. By this way, the lateral size of the tire pressure gauge is reduced in an effective manner due to good utilization of space of the enclosure 10 in a height direction other than in a length direction of the enclosure 10. Preferably, the pair of battery tabs 14 are welded onto the battery 13, and free ends (non-welded end) of the tabs 14 are secured with the circuit board 120 with screws respectively.

As described above, the intake hole 4 is defined in the bottom plate 104, and the pressure sensor 122 is disposed between the bottom plate 104 and circuit board 120.

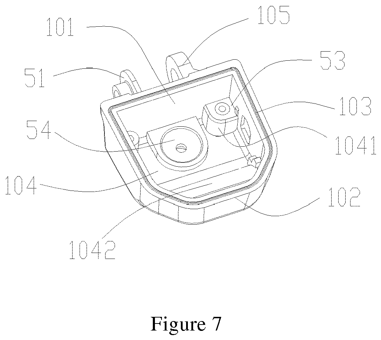

A raised portion 1042 (See figure 7) is formed on the bottom plate 104 at a location close to the rear panel 102, and an inner sidewall of the raised portion 1042 defines together with the front panel 101 a clamping opening (not labeled) for clamping the circuit board 120 and pressure sensor 122 therein. Each of two corners of the circuit board 120 adjacent to the front panel 101 is provided with a fastening hole (See figures 3 and 4, not labeled). The bottom plate 104 is provided with two second threaded embossments 1014 at locations corresponding to these fastening holes (See figures 4, 5, and 7) . The circuit board 120 is mounted to the bottom plate 104 by two screws 18 which pass through respective fastening holes and engage respective second threaded embossments 1041, thus enhancing fastening effect of the circuit board 120.

By providing the raised portion 1042, fitting the circuit board 120 into the clamping opening defined by the raised portion 1042 and front panel 101, better fastening effect is obtained by defining fastening holes in a front end of the circuit board 120 without additionally defining fastening hole in a rear end thereof. On one hand, size of the circuit board 120 is reduced (accordingly reducing size of the tire pressure gauge body 1), thus leading to miniaturization of the gauge 100. On the other hand, difficulty in design and production is also lowered. Moreover, as less material is used (for example screws and a second threaded embossment), cost is further reduced.

Please see figures 6 and 7. Preferably, a front tab 51 of the metal connection member 5 is over-molded into the front panel 101, while the bending arm 52, supporting tab 54, and metal pad 53 are disposed inside the enclosure 10.

Moreover, a through hole 532 is defined in the metal pad 53 at a location corresponding to a second threaded embossment 1041. The screw 18 passes through the corresponding fastening hole of the circuit board 120, through hole 532 of the metal pad 53 and then is connected with the second threaded embossment 1041.

As mentioned above, the antenna 123 is placed on the bottom surface of the circuit board 120; the antenna 123 is formed as a welding pad 123 located on bottom surface of the circuit board 120; and the welding pad 123 electrically contacts the metal pad 53 such that the signals representing tire pressure data travels across the welding pad 123, metal pad 53, bending arm 52, second axle bed 51, and gas nozzle assembly 2 and then is transmitted out of the tire. In current technical solution, as the antenna 123 is not made of conductive wires, there is no further need to leave large room inside the enclosure 10 for arranging the antenna, thus saving mounting space of the enclosure, and further reducing size of the tire pressure gauge 100. Also, as the welding pad 123, metal pad 53, bending arm 52, second axle bed 51, and gas nozzle assembly 2 are all made of metal, impedance is small, good conductivity is maintained, and accordingly, the pressure signals are transmitted with high quality and longer distance.

According to another embodiment of the invention, the metal pad 53 is not formed integrally with the second axle bed 51. Rather, the metal pad 53 is electrically connected to the second axle bed 51 through a conductive wire, this realizing similar signal transmission.

According to above description, a free end of each battery tab 14 is mounted on the circuit board 120 with a screw. Specifically, a through hole (not labeled) is defined in the free end of the battery tab 14, and the tab 14 extends such that the through hole overlaps the fastening hole. The screw 18 travels across the through hole of the battery tab 14, fastening hole of the circuit board 120, and finally is connected with the second threaded embossment 1041.

Referring to figure 3 and 4, preferably, the pressure sensor 122 is disposed on the circuit board 120 at a location corresponding to the intake hole 4. A sealing gasket 17 is located between the intake hole 4 and pressure sensor 122. In addition, a gas incoming path is defined between the intake hole 4 and a sensitive element of the pressure sensor 122. Through the gas incoming path, air inside the tire is able to enter into the enclosure 10 and be sensed by the sensitive element. Moreover, the sealing gasket 17 functions to seal the tire pressure gauge 100 to prevent entrance of air into a non-sensitive region inside the tire pressure gauge via the gas incoming path and a gap between the intake hole 4 and sensitive element, thus further preventing corrosion of other components inside the tire pressure gauge by water contained in air, and further preventing damage caused to other components by impact of high pressurized air.

Specifically, a vent hole 542 is defined in the supporting tab 54 of the metal connection member 5 and communicates with both of the intake hole 4 and gas incoming path. Furthermore, a receiving slot (not labeled) is defined in the supporting tab 54 and surrounds the vent hole 542. The sealing gasket 17 is disposed inside the receiving slot. In other words, the sealing gasket 17 is sandwiched between the supporting tab 54 and pressure sensor 122.

As the metal connection member 5 is partially over-molded into the enclosure 10 (that is, the bending arm 52 of the member 5 is over-molded into the front panel of the enclosure 10), the connection between the member 5 and enclosure 10 is more tight, firm, and good airtightness is obtained.

Furthermore, one of the side plates 103 is provided with a plastic injection hole 19 through which liquid material is injected into the tire pressure gauge enclosure 10, thus expelling air out of the enclosure 10, and avoiding corrosion of electrical components by vapor in the air.

Preferably, a gap is defined between the plastic injection hole 19 and top surface of the circuit board 120; another gap is defined between the plastic injection hole 19 and bottom surface of the circuit board 120; and therefore, liquid material may be injected into the top and bottom surface of the circuit board 120 via these gaps, thus eliminating problem of incomplete getting rid of air from the enclosure due to injection of liquid material from only one side of the circuit board 120, and reducing time for getting rid of air, and improving efficiency.

Furthermore, the plastic injection hole 19 is close to the metal pad 53. In other words, the plastic injection hole 19 is defined in the side plate 103 which is away from the first threaded embossment 512, thus avoiding changing location of the enclosure when securing the circuit board 120 with the enclosure 10 using the screw 3 and injecting liquid material into the enclosure 10 through the plastic injection hole 19, facilitating the entire production line, and improving production efficiency.

In the present invention, the metal connection member 5 is constructed of the metal pad 53, bending arm 52, supporting tab 54, and second axle bed 51 integrally, and it realizes functions of antenna passage, fixation of the gas nozzle, and gas incoming path communicated with the intake hole. Consequently, the tire pressure gauge 100 has compact and efficient structure, and entire size of the gauge is reduced. Moreover, the metal connection member 5 is mounted to the enclosure 10. In other words, when placing the metal connection member 5 into a mold for realizing connection of the member 5 and enclosure 10, the vent hole 542 of the supporting tab 54 of the member 5 will align the member 5 with the mold, thus accelerating molding of the enclosure 10.

Though various embodiments of the invention have been illustrated above, a person of ordinary skill in the art will understand that, variations and improvements made upon the illustrative embodiments fall within the scope of the invention, and the scope of the invention is only limited by the accompanying claims and their equivalents.

## Claims

1. A tire pressure gauge, comprising a body and a gas nozzle assembly pivotally connected with the body, wherein the body includes an enclosure in which an intake hole is defined, a PCB assembly disposed in the enclosure for detecting gas gone into the enclosure via the intake hole and transmitting pressure signals as electrical signals out of a tire, a battery for supplying power to the body, and a metal connection member partially extended out of the enclosure; the enclosure includes a front panel on which a first axle bed is formed, a first axle hole is defined in the first axle bed; the metal connection member includes a second axle bed corresponding to the first axle bed, another first axle hole is defined in the second axle bed, a first threaded embossment is formed on the second axle bed and surrounds the first axle hole of the second axle, a swing gap is defined between the first and second axle beds; and the gas nozzle assembly includes a swing head disposed in the swing gap, provided with a second axle hole, and capable of rotation with respect to the swing gap, and a screw passes through the first axle hole of the first axle bed, second axle hole of the swing head, and another first axle hole of the second axle bed, and then connects with the first threaded embossment.

2. The tire pressure gauge as recited in claim 1, wherein the PCB assembly includes a circuit board with a top surface and bottom surface, a pressure sensor, an antenna and a control circuit; the pressure sensor is configured to detect pressure of gas entered into the enclosure from the interior of the tire via the intake hole, and outputs pressure signals representing tire pressure to the antenna which then transmits the same signals; the battery is disposed on the top surface of the circuit board; and the pressure sensor, an antenna and a control circuit of the PCB assembly are all disposed on the bottom surface of the circuit board.

3. The tire pressure gauge as recited in claim 2, wherein the enclosure further includes a bottom plate connected with the front panel, a pair of side plates disposed on the bottom plate and all connected with the front panel, a rear plate, and a cover; a raised portion is formed on the bottom plate at a location close to the rear panel; and an inner sidewall of the raised portion defines together with the front panel a clamping opening for clamping the circuit board therein.

4. The tire pressure gauge as recited in claim 3, wherein each of two corners of the circuit board adjacent to the front panel is provided with a fastening hole; the bottom plate is provided with two second threaded embossments at locations corresponding to these fastening holes; and the circuit board is mounted to the bottom plate by two screws which pass through respective fastening holes and engage respective second threaded embossments.

5. The tire pressure gauge as recited in claim 4, wherein one end of the second axle bed is bent to form a bending arm; a metal pad is laterally extended from the other end of the bending arm in a direction away from the second axle bed; a through hole is defined in the metal pad at a location corresponding to a second threaded embossment; the screw passes through the corresponding fastening hole of the circuit board, through hole of the metal pad and then is connected with the second threaded embossment; and one end of the antenna is close to the fastening hole and electrically contacts the metal pad.

6. The tire pressure gauge as recited in claim 4, wherein the battery is connected with the PCB assembly through a pair of battery tabs; each of the free ends of the battery tabs is provided with a through hole; the through holes of the battery tabs extend such that the through holes overlap the fastening holes respectively.

7. The tire pressure gauge as recited in claim 3, wherein the intake hole is defined in the bottom plate; the pressure sensor is disposed on the circuit board at a location corresponding to the intake hole; a sealing gasket is located between the intake hole and pressure sensor; and the sealing gasket has a gas incoming path which interconnects the intake hole and a sensitive element of the pressure sensor.

8. The tire pressure gauge as recited in claim 7, wherein one end of the second axle bed is bent to form a bending arm; a supporting tab is laterally extended from one end of the bending arm close to the second axle bed in a direction away from the second axle bed; a vent hole is defined in the supporting tab and communicates with both of the intake hole and gas incoming path; a receiving slot is defined in the supporting tab and surrounds the vent hole; and the sealing gasket is disposed inside the receiving slot.

9. The tire pressure gauge as recited in claim 3, wherein one of the side plates is provided with a plastic injection hole; a gap is defined between the plastic injection hole and top surface of the circuit board; and another gap is defined between the plastic injection hole and bottom surface of the circuit board.

10. The tire pressure gauge as recited in claim 9, wherein the plastic injection hole is defined in the side plate away from the first threaded embossment.
